(19) **Europäisches Patentamt**
**European Patent Office**
**Office européen des brevets**

(11) **EP 1 652 335 B1**

(12) **EUROPEAN PATENT SPECIFICATION**

(45) Date of publication and mention
of the grant of the patent:
**18.04.2007 Bulletin 2007/16**

(51) Int Cl.:
*H04L 9/08* (2006.01)    *G02F 1/39* (2006.01)

(21) Application number: **04744006.0**

(22) Date of filing: **21.07.2004**

(86) International application number:
**PCT/IB2004/002346**

(87) International publication number:
**WO 2005/008953 (27.01.2005 Gazette 2005/04)**

(54) **METHOD FOR THE GENERATION OF ENTANGLED PHOTONS AND THEIR WEIGHTED DISTRIBUTION AMONG FOUR USERS**

VERFAHREN ZUR ERZEUGUNG VERSCHRÄNKTER PHOTONEN UND IHRER GEWICHTETEN VERTEILUNG AUF VIER BENUTZER

PROCÉDÉ PERMETTANT LA GENERATION DE PHOTONS INTRIQUES ET LEUR REPARTITION PONDERÉE ENTRE QUATRE UTILISATEURS

(84) Designated Contracting States:
**AT BE BG CH CY CZ DE DK EE ES FI FR GB GR HU IE IT LI LU MC NL PL PT RO SE SI SK TR**

(30) Priority: **22.07.2003 IT TO20030563**

(43) Date of publication of application:
**03.05.2006 Bulletin 2006/18**

(73) Proprietor: **ELSAG SPA**
**16154 Genova (IT)**

(72) Inventor: **BOVINO, Fabio, Antonio**
**I-16132 Genova (IT)**

(74) Representative: **Jorio, Paolo et al**
**STUDIO TORTA S.r.l.**
**Via Viotti, 9**
**10121 Torino (IT)**

(56) References cited:
- **KIM Y-H, GRICE W P: "Reliability of the beamsplitter based Bell-state measurement"[Online] 9 April 2003 (2003-04-09), XP002307848 arXiv:quant-ph/0304066 Retrieved from the Internet: URL:http://www.arxiv.org/pdf/quant-ph/0304 066> [retrieved on 2004-11-26]**
- **KWIAT P G ET AL: "New high-intensity source of polarization-entangled photon pairs" PHYSICAL REVIEW LETTERS, NEW YORK,NY, US, vol. 75, no. 24, 11 December 1995 (1995-12-11), pages 4337-4341, XP002242202 ISSN: 0031-9007**

**Description**

<u>TECHNICAL FIELD</u>

The present invention relates to a method for generation and weighted distribution of entangled photons between four users, which may be used in a quantum process employing parametric fluorescence processes.

<u>BACKGROUND ART</u>

As is known, one application of parametric fluorescence processes is quantum cryptography, which employs quantum physics principles to generate, transmit, and decode information at an extremely high security level.
Such processes comprise a number of steps, which include:

a) Creating a pair of entangled photons. This is done by exciting a birefringent non-linear (e.g. barium beta borate) crystal using a laser beam, in particular a pulsating laser beam, to create a pair of photons of the same frequency and opposite (vertical/horizontal) polarization.
b) Rough quantum transmission. The pairs of photons generated are transmitted by respective private transmission channels (e.g. optical fibres or vacuum) to a first and second user.
c) Random acquisition. Each user compares the single received photon with a first reference base (base A) and a second reference base (base B). Each reference base comprises two perpendicular axes, and the two bases are spaced angularly apart by a predetermined angle (e.g. 45°). The first base (base A) and the second base (base B) are selected at random and independently by the two users. Since polarization of the acquired photon may be parallel to a first or second axis of the base, the comparison gives a binary result (0, 1).
d) Public discussion. Over a public channel, the two users compare the type of base (base A, base B) used to make the comparison, but without exchanging the results of the comparison between the photon and the base. When the bases used for the comparison match, the results of the comparison by the two users are comparable. The results of the comparison made by the two users relative to the same pair of photons but with difference bases (bases A, B and B, A respectively) are therefore discarded to reduce the data set and form a set of "sifted" data relating solely to the results of the comparison made of the same pair of photons with the same base. Because of the quantum principle referred to above (each pair of photons has opposite polarizations), each result (0, 1) acquired by a first user must correspond to an opposite result (1, 0) acquired by the second user with the same base. Consequently, the sifted data acquired by the first user must be opposite (in the binary sense) to the data acquired by the second user.
e) Espionage test. The two users exchange subsets of sifted data over the public channel to ensure the data is actually correlated as described above. If it is, absolute security of the received data is acknowledged. If it is not, possible espionage of data transmission over the private channel is indicated. Any attempt, in fact, to measure and/or copy data transmitted over the private channel affects the polarization (vertical/horizontal) relationship of the pair, thus providing users with a clear espionage alert. Because of the impossibility of cloning or extracting quantum state information, quantum cryptography provides for generating a practically maximum-security user key.
f) Error correction. Both users assess the security of their code keys by making a parity check of certain subsets of sifted data over the public channel. For security reasons, this is done using very limited sets of data.

As regards the generation of pairs of entangled photons, this is normally done by a first power (e.g. 10W) laser exciting a second lower-power (e.g. 2.2W) laser, which in turn generates a laser (pump) beam which strikes the birefringent non-linear crystal.

<u>DISCLOSURE OF INVENTION</u>

It is an object of the present invention to provide a device for generation and weighted distribution of entangled photons between four users, which may be used in a quantum process employing parametric fluorescence processes.
According to the present invention, there is provided a method for the generation of entangled photons and their weighted distribution among four users, which may be used in a quantum process employing parametric fluorescence processes, and which comprises the steps of: directing a laser pump beam onto a type-two crystal to generate pairs of photons of opposite polarizations at the output of the crystal; directing the photons at the output of the crystal to first and second inputs of a beam splitter, which transmits some of the photons at the input to first and second outputs of the beam splitter, and reflects the other photons; and directing the photons reflected by said beam splitter to third and fourth outputs; the total state of the photons, following interaction with the beam splitter, being expressed by:

$$\alpha^2\Psi_{ab}{}^{(-)} - \beta^2\Psi_{cd}{}^{(-)} + i\alpha\beta\Psi_{db}{}^{(-)} + i\alpha\beta\Psi_{ca}{}^{(-)}$$

where: $\psi_{ab}{}^{(-)}$ represents the Bell state of the photons at the first and second output; $\psi_{cd}{}^{(-)}$ represents the Bell state of the photons at the third and fourth output; $\psi_{db}{}^{(-)}$ represents the Bell state of the photons at the fourth and second output; $\psi_{ca}{}^{(-)}$ represents the Bell state of the photons at the third and first output; $|\alpha|^2$ represents the transmittivity of the beam splitter; and $|\beta|^2$ represents the reflectivity of the beam splitter, where $|\alpha|^2 + |\beta|^2 = 1$; a pair of photons associated with a respective Bell state, which may be used in a quantum cryptography process, being present and usable at a pair of said four outputs.

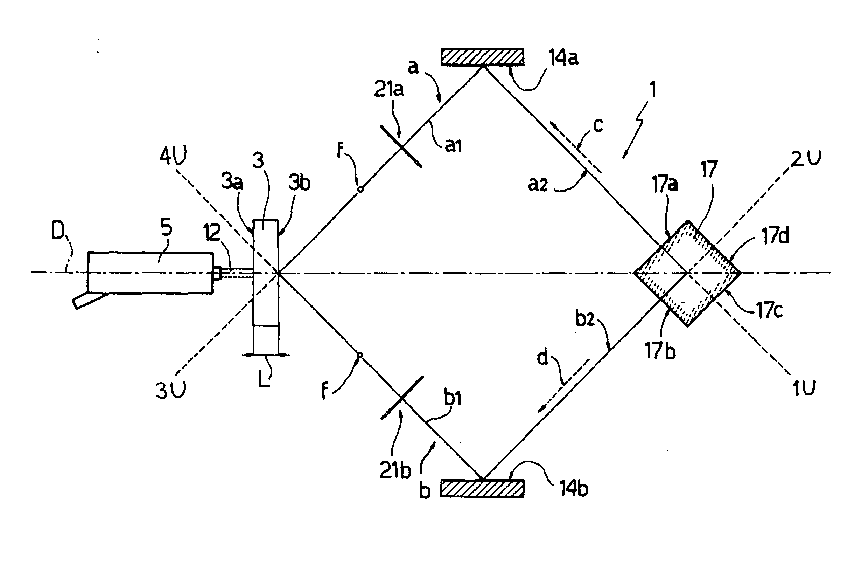

## BRIEF DESCRIPTION OF THE DRAWING

The invention will now be described with reference to the accompanying drawing which shows, schematically, a device for generation and weighted distribution of entangled photons between four users, which may be used in a quantum process employing parametric fluorescence processes.

## BEST MODE FOR CARRYING OUT THE INVENTION

Number 1 in the accompanying drawing indicates as a whole a device for generation and weighted distribution of entangled photons between four users.
Device 1 comprises a type-two birefringent crystal 3, in particular a parallelepiped-shaped, barium beta borate crystal of constant thickness L.
Crystal 3 is connected on a first side 3a to a known laser beam source 5 for generating an excitation laser beam (pump beam) 12 which strikes crystal 3 to produce pairs of photons f issuing from a second side 3b of crystal 3.
The pairs of photons generated at the output have opposite polarizations (i.e. one photon has vertical polarization (e), and the other horizontal polarization (o)).
Laser beam 12 travels in a straight propagation direction D intersecting crystal 3.
As is known, the photons generated by interaction between laser pump beam 12 and type-two crystal 3 travel along paths which lie in a first and second conical region having vertices tangent to the crystal, and axes symmetrical with respect to the pump beam. The paths of the photons can be represented, in a plane perpendicular to the pump beam, by a first annulus (not shown) and a second annulus (not shown), which respectively represent the most likely locations of the paths of a first and second photon in the pair. Location of a photon inside the annulus is highly unlikely, though not impossible.
Device 1 comprises a first and a second reflecting element 14a, 14b (conveniently defined by plane metal mirrors) located on opposite sides of, and equally spaced with respect to, direction D.
Device 1 also comprises a beam splitter 17 located along propagation direction D, on the opposite side of reflecting members 14a, 14b to crystal 3, and which divides the input signal, supplies part (in particular, 50%) of the input signal to two outputs 1U and 2U, and reflects the rest (in this case, the other 50%) of the input signal.
A first and a second photon in each generated pair travel along paths a, b, which respectively comprise:

-    a first portion a1, b1 extending between second side 3b of crystal 3 and first and second reflecting element 14a, 14b respectively; and
-    a second portion a2, b2 extending respectively from first and second reflecting element 14a, 14b to beam splitter 17, through which paths a and b extend.

A first and a second iris 21a, 21b are located along paths a and b, between crystal 3 and first and second reflecting element 14a, 14b, are travelled through by the photons travelling along first and second portion a1, b1 of path a, b, and have apertures in the order of a millimetre.
Beam splitter 17 has first and second adjacent plane faces 17a, 17b which define first and second inputs of beam splitter 17, and which are inclined at 45° with respect to propagation direction D.
Third and fourth plane faces 17c, 17d, opposite faces 17a, 17b, define the first and second outputs 1U, 2U of beam splitter 17, to which, as stated in the above example, part, e.g. 50%, of the input signal of splitter 17 is supplied.
The rest, e.g. the other half, of the input signal of the beam splitter is reflected and issues from first and second faces 17a, 17b. The reflected signal travels along portions a2, b2 and strikes mirrors 14a, 14b, which direct the signal along portions a1, b1 onto crystal 3. The reflected signal is picked up, after travelling through crystal 3, at the end of paths a and b, which define third and fourth outputs 3U, 4U of the beam splitter.
The path of the photons reflected by beam splitter 17 onto crystal 3 via reflecting element 14a defines a path c, and the path of the photons reflected by beam splitter 17 onto crystal 3 via reflecting element 14b defines a path d.

In actual use, the pair of photons generated by interaction between laser beam 12 and crystal 3 has the following state:

$$1/\text{square root(2)}(|1\rangle_{ao}\ |1\rangle_{be}\ -\ |1\rangle_{ae}\ |1\rangle_{bo})\quad (1)$$

More specifically, the above (standard quantum mechanics) notation means that, in each pair, a first photon (notation |1) travels along path a (subscript a) and has horizontal polarization (subscript o), and a second photon (notation |1) travels along path b (subscript b) and has vertical polarization (subscript e), or that, in each pair, a first photon (notation |1) travels along path a (subscript a) and has vertical polarization (subscript e), and a second photon (notation |1) travels along path b (subscript b) and has horizontal polarization (subscript o).

Notation (1) may be rewritten:

$$\Psi_{ab}{}^{(-)}$$

where the symbol $\Psi^{(-)}$ represents the Bell state which, as is known, represents the information unit which may be used in a quantum cryptography process. The subscript ab indicates the Bell state relates to the photons travelling along paths a and b and which are picked up at outputs 1U and 2U.

The total state of the photons, following interaction with beam splitter 17, is expressed by:

$$\alpha^2\Psi_{ab}{}^{(-)}\ -\ \beta^2\Psi_{cd}{}^{(-)}\ +\ i\alpha\beta\Psi_{db}{}^{(-)}\ +\ i\alpha\beta\Psi_{ca}{}^{(-)}\quad (2)$$

where:

+ $\psi_{ab}{}^{(-)}$ represents the Bell state of the photons at the first and second output 1U, 2U;
+ $\psi_{cd}{}^{(-)}$ represents the Bell state of the photons at the third and fourth output 3U, 4U;
+ $\Psi_{db}{}^{(-)}$ represents the Bell state of the photons at the fourth and second output 4U, 2U;
+ $\Psi_{ca}{}^{(-)}$ represents the Bell state of the photons at the third and first output 3U, 1U;
+ $|\alpha|^2$ represents the transmittivity of the beam splitter;
+ $|\beta|^2$ represents the reflectivity of the beam splitter, where $|\alpha|^2 + |\beta|^2 = 1$; and
+ i represents the imaginary unit.

With regard to Bell states, see the article with title "Realibility of the beamsplitter based Bell-state 'measurements" of KIM Y-H et al on arXiv: quant-ph/0304066

A pair of photons associated with a respective Bell state, which may be used in a quantum cryptography process, is therefore present (and can therefore be picked up and used) at pairs of the four outputs 1U, 2U, 3U, 4U.

The device so formed therefore provides two active signals at two of the four possible outputs. By appropriately modulating parameters $\alpha$ and $\beta$ of the beam splitter, the proportion of pairs of photons available in the four possible cases can be weighted. For example, if $|\alpha|^2 = |\beta|^2 = 50\%$, the four cases are equally probable.

## Claims

1. A method for the generation of entangled photons and their weighted distribution among four users, which may be used in a quantum process employing parametric fluorescence processes, and which comprises the steps of:

- directing a laser pump beam (12) onto a type-two crystal (3) to generate pairs of photons (f) of opposite polarizations (e, o) at the output (3b) of the crystal;
- directing (14a, 14b) the photons at the output (3b) of the crystal (3) to first and second inputs (17a, 17b) of a beam splitter (17), which transmits some $|\alpha|^2$ of the photons at the input to first and second outputs (1U, 2U) of the beam splitter, and reflects the other $|\beta|^2 = 1 - |\alpha|^2$ photons; and
- directing (14a, 14b) the photons reflected by said beam splitter to third and fourth outputs (3U, 4U);

the total state of the photons, following interaction with the beam splitter, being expressed by:

$$\alpha^2 \Psi_{ab}^{(-)} - \beta^2 \Psi_{cd}^{(-)} + i\alpha\beta\Psi_{db}^{(-)} + i\alpha\beta\Psi_{ca}^{(-)}$$

where:

+ $\psi_{ab}^{(-)}$ represents the Bell state of the photons at the first and second output;
+ $\psi_{cd}^{(-)}$ represents the Bell state of the photons at the third and fourth output;
+ $\psi_{db}^{(-)}$ represents the Bell state of the photons at the fourth and second output;
+ $\psi_{ca}^{(-)}$ represents the Bell state of the photons at the third and first output;
+ $|\alpha|^2$ represents the transmittivity of the beam splitter;
+ $|\beta|^2$ represents the reflectivity of the beam splitter, where $|\alpha|^2 + |\beta|^2 = 1$;

a pair of photons associated with a respective Bell state, which may be used in a quantum cryptography process, being present and usable at a pair of said four outputs (1U, 2U, 3U, 4U).

2. A method as claimed in Claim 1, wherein said step of directing the photons onto said beam splitter (17) comprises the step of reflecting (14a, 14b) the generated photons onto first and second faces (17a, 17b) of said beam splitter (17).

3. A method as claimed in Claim 2, wherein said step of directing (14a, 14b) the photons reflected by said beam splitter to third and fourth outputs (3U, 4U) comprises the step of reflecting (14a, 14b) the photons from said first and second faces of said beam splitter (17) to said third and fourth outputs.

**Patentansprüche**

1. Verfahren für die Erzeugung von verschränkten Photonen und für ihre gewichtete Verteilung unter vier Anwendern, das bei einem Quantenprozess benutzt werden kann, der parametrische Fluoreszenzprozesse verwendet, und das die Schritte umfasst:

- Richten eines Pumplaserstrahls (12) auf einen Typ II Kristall (3), um Photonenpaare (f) mit entgegengesetzten Polaritäten (e, o) am Ausgang (3b) des Kristalls zu erzeugen,
- Richten (14a, 14b) der Photonen am Ausgang (3b) des Kristalls (3) auf einen ersten und einen zweiten Eingang (17a, 17b) eines Strahlteilers (17), der einige $|\alpha|^2$ der Photonen am Eingang auf einen ersten und einen zweiten Ausgang (1U, 2U) des Strahlteilers überträgt und die anderen $|\beta|^2 = 1 - |\alpha|^2$ Photonen reflektiert, und
- Richten (14a, 14b) der durch den Strahlteiler reflektieren Photonen zu einem dritten und vierten Ausgang (3U, 4U),

wobei der Gesamtzustand der Photonen nach der Wechselwirkung mit dem Strahlteiler ausgedrückt ist durch:

$$\alpha^2 \Psi_{ab}^{(-)} - \beta^2 \Psi_{cd}^{(-)} + i\alpha\beta\Psi_{db}^{(-)} + i\alpha\beta\Psi_{ca}^{(-)}$$

wobei:

+ $\Psi_{ab}^{(-)}$ den Bell-Zustand der Photonen am ersten und zweiten Ausgang wiedergibt,
+ $\Psi_{cd}^{(-)}$ den Bell-Zustand der Photonen am dritten und vierten Ausgang wiedergibt,
+ $\Psi_{db}^{(-)}$ den Bell-Zustand der Photonen am vierten und zweiten Ausgang wiedergibt,
+ $\Psi_{ca}^{(-)}$ den Bell-Zustand der Photonen am dritten und ersten Ausgang wiedergibt,
+ $|\alpha|^2$ die Durchlässigkeit des Strahlteilers wiedergibt,
+ $|\beta|^2$ das Reflexionsvermögen des Strahlteilers wiedergibt, wobei $|\alpha|^2 + |\beta|^2 = 1$ ist, und

ein Photonenpaar, das zu einem jeweiligen Bell-Zustand gehört, der in einem quantenkryptografischen Prozess verwandt werden kann, an einem Paar der vier Ausgänge (1U, 2U, 3U, 4U) vorliegt und nutzbar ist.

**2.** Verfahren nach Anspruch 1, bei dem der Schritt des Richtens der Photonen auf den besagten Strahlteiler (17) den Schritt des Reflektierens (14a, 14b) der erzeugten Photonen auf eine erste und eine zweite Fläche (17a, 17b) des Strahlteilers (17) umfasst.

**3.** Verfahren nach Anspruch 2, bei dem der Schritt des Richtens (14a, 14b) der vom Strahlteiler reflektierten Photonen auf den dritten und vierten Ausgang (3U, 4U) den Schritt des Reflektierens (14a, 14b) der Photonen von der besagten ersten und zweiten Fläche des Strahlteilers (17) auf den besagten dritten und vierten Ausgang umfasst.

**Revendications**

**1.** Procédé pour la génération de photons intriqués et leur distribution pondérée entre quatre utilisateurs, qui peuvent être utilisés dans un processus quantique employant des processus de fluorescence paramétrique, et qui comprend les étapes de:

- diriger un faisceau de pompage laser (12) sur un cristal de type deux (3) pour générer des paires de photons (f) de polarisations opposées (e, o) à la sortie (3b) du cristal;
- diriger (14a, 14b) les photons à la sortie (3b) du cristal (3) vers une première et une deuxième sorties (17a, 17b) d'un séparateur de faisceaux (17), qui transmet quelque $|\alpha|^2$ des photons à l'entrée vers une première et une deuxième sorties (1U, 2U) du séparateur de faisceaux, et réfléchit les autres $|\beta|^2 = 1 - |\alpha|^2$ photons; et
- diriger (14a, 14b) les photons réfléchis par ledit séparateur de faisceaux vers une troisième et une quatrième sorties (3U, 4U);

l'état total des photons, à la suite d'une interaction avec le séparateur de faisceaux, étant exprimé par :

$$\alpha^2 \Psi_{ab}^{(-)} - \beta^2 \Psi_{cd}^{(-)} + i\alpha\beta \Psi_{db}^{(-)} + i\alpha\beta \Psi_{ca}^{(-)}$$

où:

+ $\Psi_{ab}^{(-)}$ représente l'état de Bell des photons au niveau de la première et de la deuxième sorties;
+ $\Psi_{cd}^{(-)}$ représente l'état de Bell des photons au niveau de la troisième et de la quatrième sorties;
+ $\Psi_{db}^{(-)}$ représente l'état de Bell des photons au niveau de la quatrième et de la deuxième sorties;
+ $\Psi_{ca}^{(-)}$ représente l'état de Bell des photons au niveau de la troisième et de la première sorties;
+ $|\alpha|^2$ représente la transmittance du séparateur de faisceaux;
$|\beta|^2$ représente la réflectivité du séparateur de faisceaux, où $|\alpha|^2 + |\beta|^2 = 1$;

une paire de photons associés à un état de Bell respectif, qui peuvent être utilisés dans un processus de cryptographie quantique, étant présents et utilisables au niveau d'une paire desdites quatre sorties (1 U, 2U, 3U, 4U).

**2.** Procédé comme revendiqué dans la revendication 1, dans lequel ladite étape consistant à diriger les photons sur ledit séparateur de faisceaux (17) comprend l'étape consistant à réfléchir (14a, 14b) les photons générés sur une première et une deuxième faces (17a, 17b) dudit séparateur de faisceaux (17).

**3.** Procédé comme revendiqué dans la revendication 2, dans lequel ladite étape consistant à diriger (14a, 14b) les photons réfléchis par ledit séparateur de faisceaux à une troisième et une quatrième sorties (3U, 4U) comprend l'étape consistant à réfléchir (14a, 14b) les photons depuis lesdites première et deuxième faces dudit séparateur de faisceaux (17) vers lesdites troisième et quatrième sorties.